# FASCICULE DE BREVET EUROPEEN

(11) **EP 3 313 597 B1**
(45) Date de publication et mention de la délivrance du brevet: **17.06.2020**
(21) Numéro de dépôt: 16750892.8
(22) Date de dépôt: 27.06.2016
(51) Int. Cl.: B22F 3/105, B22F 5/04, B23P 15/04, B29C 67/00, F01D 5/00, F01D 5/14, F01D 5/20, B22F 3/24, B22F 5/00

(54) **PROCEDE DE FABRICATION D'UNE AUBE COMPORTANT UNE BAIGNOIRE INTEGRANT UN MURET**
VERFAHREN ZUR HERSTELLUNG EINER KLINGE MIT EINER SQUEALER-SPITZE MIT EINER KLEINEN WAND
METHOD FOR MANUFACTURING A BLADE COMPRISING A SQUEALER TIP INTEGRATING A SMALL WALL

(30) Priorité: 29.06.2015 FR 1556065
(43) Date de publication de la demande: 02.05.2018
(73) Titulaire: Safran Aircraft Engines, 75015 Paris (FR)
(72) Inventeur: VOLLEBREGT, Matthieu, Jean Luc, 77550 Moissy Cramayel (FR); GUERARD, Coralie, 77550 Moissy Cramayel (FR); HUCHIN, Patrick, Emilien, Paul, Emile, 77550 Moissy Cramayel (FR)
(74) Mandataire: Brevalex
(86) Numéro de dépôt international: PCT/FR2016/051580
(87) Numéro de publication internationale: WO 2017/001751

(56) Documents cités:
- EP-A1- 1 721 699
- EP-A1- 2 639 405
- EP-A1- 2 716 870
- EP-A2- 1 895 099
- WO-A1-2015/069411
- US-A- 5 738 491
- US-A1- 2008 044 289
- US-A1- 2008 317 597
- US-A1- 2009 180 896
- US-A1- 2010 200 189
- US-A1- 2015 034 266

## Description

### DOMAINE TECHNIQUE

L'invention concerne la fabrication d'une aube de moteur d'aéronef de type turbomachine, tel que par exemple un turboréacteur ou un turbopropulseur.

### ÉTAT DE LA TECHNIQUE ANTÉRIEURE

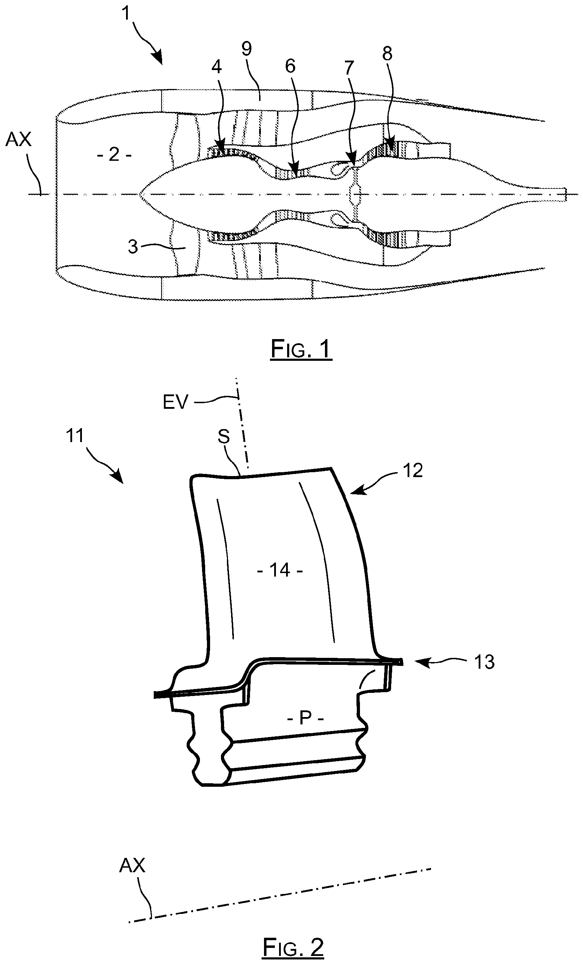

Dans un tel moteur, repéré par 1 dans la figure 1, l'air est admis dans une manche d'entrée 2 pour traverser une soufflante comportant une série de pales rotatives 3 avant de se scinder en un flux primaire central et un flux secondaire entourant le flux primaire.

Le flux primaire est compressé par des turbines 4 et 6 avant d'atteindre une chambre de combustion 7, après quoi il se détend en traversant des turbines 8, avant d'être évacué en générant une poussée. Le flux secondaire est quant à lui propulsé directement par la soufflante pour générer une poussée complémentaire.

Chaque turbine 8 comporte des séries d'aubes orientées radialement et régulièrement espacées autour d'un arbre de rotation AX porté par un carter externe 9 entourant l'ensemble.

Le refroidissement des aubes est assuré en faisant circuler dans chaque aube de l'air prélevé en amont de la combustion et admis en pied d'aube, cet air étant évacué par des perçages traversant les parois de ces aubes.

Une telle aube, qui est repérée par 11 sur la figure 2, comprend un pied P par lequel elle est fixée à un corps rotatif, et une pale 12 portée par ce pied P, le pied et la pale étant séparés par une plateforme 13.

La pale 12 a une forme gauche vrillée autour d'un axe EV dit axe d'envergure qui est perpendiculaire à l'axe AX. Elle comprend une base par laquelle elle est raccordée à la plateforme 13 et qui se prolonge radialement jusqu'à un sommet S qui est l'extrémité libre de cette pale. Les deux parois principales de la pale sont sa paroi d'intrados 14 et sa paroi d'extrados qui sont espacées l'une de l'autre.

Le sommet S de l'aube 11 comporte une paroi de fermeture perpendiculaire à la direction EV, et qui raccorde les parois d'intrados et d'extrados. Cette paroi de fermeture non visible sur la figure 2 est en retrait vers l'axe AX par rapport aux bords libre des parois d'intrados et d'extrados. Elle délimite conjointement avec ces bords une portion creuse ouverte en direction opposée à l'axe AX, appelée baignoire qui est située en tête de l'aube, c'est-à-dire à son sommet.

Une telle aube est fabriquée par moulage d'un matériau métallique, en utilisant notamment un noyau comprenant un premier élément de noyau et un second élément de noyau pour délimiter d'une part l'espace interne du corps de pale et d'autre part l'espace interne de la baignoire. Ces deux éléments de noyaux sont espacés l'un de l'autre le long de la direction d'envergure EV par une faible distance.

Les besoins accrus en performances conduisent à optimiser le refroidissement de la baignoire, en prévoyant par exemple des cloisons murets ou internes portées par le fond de baignoire. Ces cloisons ou nervures visent à optimiser l'aérodynamisme dans la baignoire afin d'améliorer le refroidissement en sommet de l'aube, notamment en limitant les fuites depuis l'intrados vers l'extrados.

L'ajout de telles nervures ou cloisons complique significativement l'élaboration du second élément de noyau. En effet, celui-ci est fabriqué avec une boîte à noyau, c'est-à-dire un moule en deux parties qui s'ouvrent en s'écartant l'une de l'autre, mais selon une direction de démoulage qui s'étend dans un plan normal à l'axe d'envergure de la pale.

La contrainte de cette direction de démoulage qui résulte d'impératifs de fabrication, fait que des fentes délimitant les nervures pour le fond de la baignoire ne peuvent pas être prévues en extrémité du second élément de noyau. De telles fentes constitueraient des contre-dépouilles rendant impossible le démoulage du second élément de noyau lors de sa fabrication, du fait que leurs orientations diffèrent de la direction de démoulage.

Une possibilité consiste à fabriquer le second élément de noyau en plusieurs parties de céramique assemblées les unes aux autres par collage. Ceci complique significativement la fabrication et tend par conséquence à augmenter le taux de rebut, en plus de donner lieu à un élément de noyau présentant une robustesse insuffisante.

Le document WO2015069411, enseigne de constituer un corps d'aube par moulage et d'y rapporter le sommet d'aube par fabrication additive, ce qui est contraignant en termes de fabrication pour obtenir la cohésion requise entre le corps d'aube issu de moulage et l'ensemble de son sommet rapporté par fabrication additive. US2010/200189A1 divulgue un procédé dans lequel la portion supérieure d'une aube de turbine est faite par coulée/moulage , une plaque constituant le fond de la baignoire est jointe par brasage/soudure à l'aube de turbine faite par coulée et les parois et le fond de la baignoire sont déposées par une méthode du type DMD.

L'objet de l'invention est d'apporter un procédé de fabrication permettant de réaliser une grande variété de formes internes au niveau de la baignoire sans pénaliser le taux de rebut.

### EXPOSÉ DE L'INVENTION

A cet effet, l'invention a pour objet un procédé de fabrication d'une aube de turbomachine comprenant une paroi d'intrados et une paroi d'extrados espacées l'une de l'autre, cette aube comprenant un sommet avec une paroi de fermeture réunissant les parois d'intrados et d'extrados dans la région de ce sommet pour délimiter un fond d'une forme de baignoire située en sommet d'aube, le procédé comportant une étape de moulage mettant en œuvre un élément de noyau délimitant la forme en baignoire, caractérisé en ce qu'il comporte une étape d'apport de matière métallique sur le fond de la baignoire avec un procédé de fabrication additive afin de constituer dans cette baignoire une cloison interne portée par son fond.

Selon l'invention, le procédé de fabrication additive qui est habituellement utilisé pour constituer complètement la géométrie d'une pièce est ici exploité pour compléter une pièce issue de fonderie. Avec cette solution, toute forme de cloison peut être constituée sur le fond de baignoire, sans incidence sur l'opération du moulage ni sur la forme des éléments de noyaux à mettre en oeuvre.

Différents procédés de fabrication additive peuvent être utilisés, comme le procédé de Construction Laser Additive Directe, généralement désigné par la marque déposée CLAD, le procédé dit de Laser Metal Deposition généralement désigné par l'acronyme LMD, le procédé dit de Direct Metal Deposition généralement désigné par l'acronyme DMD, ou encore le procédé dit de Direct Laser Metal Deposition généralement désigné par l'acronyme DLMD.

L'invention a également pour objet un procédé ainsi défini, dans lequel l'apport de matière métallique est réalisé par sous forme de dépôt de couches successives de poudre métallique.

L'invention a également pour objet un procédé ainsi défini, dans lequel le procédé de fabrication additive est du type à fusion de dépôt de poudres métalliques par faisceau laser.

L'invention a également pour objet un procédé ainsi défini, comportant après l'étape d'apport de matière, une étape d'usinage avec un procédé tel qu'un procédé d'usinage par électro érosion de la matière déposée.

L'invention a également pour objet un procédé ainsi défini, dans lequel la matière est déposée de façon à s'étendre depuis un bord de la paroi d'intrados, jusqu'à un bord de la paroi d'extrados.

### BRÈVE DESCRIPTION DES DESSINS

La figure 1 déjà décrite est une vue d'ensemble d'un turboréacteur à double flux représenté en coupe latérale ;
La figure 2 déjà décrite est une vue d'ensemble d'une aube de réacteur;
La figure 3 est vue partielle en perspective d'une baignoire d'aube telle qu'issue de fonderie ;
La figure 4 est une représentation schématique du procédé utilisé dans l'invention pour apporter de la matière sur le fond de la baignoire de l'aube ;
La figure 5 est une vue partielle en perspective d'une baignoire dans le fond de laquelle a été déposé un matériau conformément à l'invention en vue d'une opération d'usinage pour mettre le matériau déposé en forme de cloison ;
La figure 6 est une vue partielle en perspective d'une baignoire d'aube selon l'invention comportant une cloison obtenu par dépôt de matériau puis par usinage.

### EXPOSÉ DÉTAILLÉ DE MODES DE RÉALISATION PARTICULIERS

Comme visible sur la figure 1, une aube 16 telle qu'issue de fonderie comporte une paroi d'intrados 17 et une paroi d'extrados 18 qui s'étendent sensiblement selon la direction d'envergure EV de cette aube, et dont les bords supérieurs, repérés par 19 et 21 délimitent le sommet de cette aube 16.

Ces parois d'intrados et d'extrados 17 et 18 sont espacées l'une de l'autre tout en étant raccordées l'une à l'autre d'une part au niveau du bord d'attaque de l'aube, repéré par 22, et d'autre part au niveau du bord de fuite de l'aube qui n'apparaît pas sur la figure, ces deux bords s'étendant à peu près parallèlement à la direction d'envergure EV.

Ces parois sont encore raccordées l'une à l'autre en sommet de pale par une paroi dite de fermeture, repérée par 23, et qui s'étend perpendiculairement à la direction d'envergure, tout en étant déportée le long de la direction d'envergure d'une certaine hauteur par rapport aux sommets des bords 19 et 21. Les bords 19 et 21 dépassent ainsi de la paroi de fermeture qu'ils entourent, pour délimiter avec celle-ci la baignoire 24 du sommet d'aube dont ils constituent les bords et dont la paroi de fermeture constitue le fond.

La base de l'invention est d'utiliser un procédé dit de fabrication additive pour apporter sur le fond de la baignoire de l'aube telle qu'issue de fonderie, de la matière métallique de façon à former une cloison interne dans cette baignoire. Le procédé utilisé est un procédé de type fusion de poudres métalliques par faisceau laser avec dépôt en couches successives. D'autres procédés de dépôt métallique peuvent être envisagés.

Un tel procédé qui est habituellement désigné par la marque déposée CLAD, à savoir le procédé de Construction Laser Additive Directe consiste à utiliser un appareillage 26 pour générer un faisceau laser 27 afin de faire fondre sur un substrat qui est ici le fond 23 de la baignoire 24, une ou des poudres métalliques 29 apportées par une buse 31, de manière à constituer successivement des couches de dépôt 32 d'un matériau métallique. Cette buse est une buse coaxiale apte à réaliser l'injection homogène de poudres métalliques à travers un faisceau laser.

Avec ce procédé, les poudres fondues par le laser constituent un dépôt homogène et dense sur la surface ou couche qui les porte, qui est elle aussi fusionnée au cours du processus. Comme Il n'y a pas de contact notamment entre la buse et le substrat, le procédé est exempt d'usure. Les dépôts ou empilements successifs sont protégés tout au long du processus par un gaz neutre pour parer aux problèmes d'oxydation.

Ce procédé permet de réaliser des dépôts en ciblant avec une certaine précision les endroits où le matériau est apporté. Il est en outre possible d'utiliser deux métaux d'apports différents pour réaliser le cas échéant un alliage à proportions évolutives suivant la hauteur. Ceci permet d'optimiser différents aspects comme la masse, l'accroche avec le substrat c'est-à-dire la dilution et la porosité, ainsi que les propriétés d'abradabilité, d'abrasivité, de dilatation ou autres.

D'une manière générale, le matériau déposé est lui-même choisi en fonction du substrat pour présenter une tenue mécanique appropriée, une abradabilité, ainsi qu'une compatibilité avec le substrat qui sont appropriées en matière notamment de dilution et de porosité.

Comme visible dans la figure 1, la baignoire de l'aube brute de fonderie comporte un fond 23 qui est plan, et selon l'invention, une cloison interne est formée sur ce fond plan, par apport de matière selon le procédé CLAD, puis par usinage de la matière ainsi ajoutée afin de lui donner un état de surface et une cotation correspondant à des critères prédéfinis.

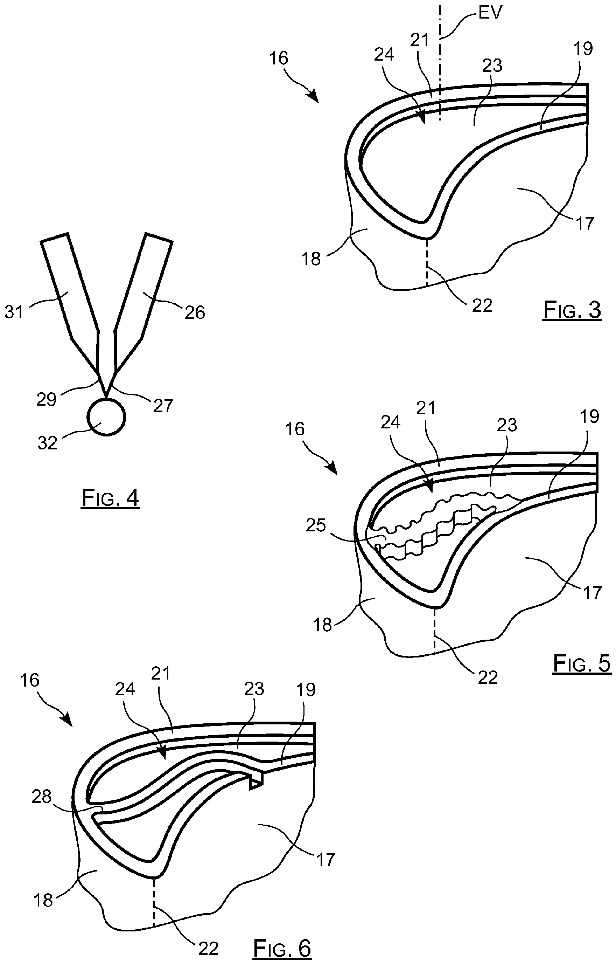

Comme visible sur la figure 5, la matière ajoutée par procédé CLAD est déposée selon la trajectoire et la forme de la cloison à réaliser, de manière à constituer un apport de matière 25 ayant une forme générale correspondant à celle de la cloison à obtenir. Comme représenté sur la figure 5, la matière apportée constitue un dépôt pouvant être relativement grossier au vu des tolérances à obtenir en ce qui concerne la définition géométrique de la cloison finie. Ces tolérances dimensionnelles sont dictées par les contraintes aérodynamiques auxquelles la baignoire de l'aube doit répondre en fonctionnement. Le dépôt métallique, repéré par 25 sur la figure 5, constitue ainsi la matière brute à partir de laquelle sera formée la cloison.

Ce dépôt est ensuite usiné pour constituer la cloison finale, proprement dite, qui apparaît sur la figure 6 dans laquelle elle est repérée par 28. Cet usinage peut être réalisé par électro érosion, selon le procédé connu par l'acronyme anglais EDM signifiant Electrical Discharge Machining c'est-à-dire usinage par décharge électrique. Cet usinage peut aussi être assuré au moyen d'outils coupants de type fraise ou analogue, ce qui permet de réaliser la finition de forme permettant de constituer la cloison 28 en tant que telle.

L'invention a été décrite avec un procédé de fabrication additive par fusion de poudres par faisceau laser en dépôt par couches successives, mais d'autres procédés peuvent être utilisés. Notamment, le procédé SWET signifiant Superallow Welding at Elevated Temperature peut aussi être envisagé.

D'une manière générale, le procédé selon l'invention permet ainsi de fabriquer une aube comportant au niveau de sa baignoire un muret pouvant avoir tout type de forme, sans pour autant apporter de contrainte additionnelle au processus de moulage intervenant dans la fabrication de cette aube.

## Revendications

1. Procédé de fabrication d'une aube (16) de turbomachine comprenant une paroi d'intrados (17) et une paroi d'extrados (18) espacées l'une de l'autre, un sommet comportant une baignoire (24) délimitée par une paroi de fermeture (23) réunissant les parois d'intrados (17) et d'extrados (18), par un bord (19) de la paroi d'intrados (17) dépassant de la paroi de fermeture (23) et par un bord (21) de la paroi d'extrados (18) dépassant de la paroi de fermeture (23), la paroi de fermeture (23) constituant le fond (23) de la baignoire (24), ce procédé comportant une étape de fonderie pour constituer au moins la baignoire (24) et les parois d'intrados (17) et d'extrados (18) de l'aube, **caractérisé en ce qu'**il comporte une étape d'apport de matière métallique sur le fond (23) de la baignoire avec un procédé de fabrication additive afin de constituer dans cette baignoire une cloison interne (25, 28) portée par son fond (23).

2. Procédé selon la revendication 1, dans lequel l'apport de matière métallique est réalisé sous forme de dépôt de poudre métallique.

3. Procédé selon la revendication 2, dans lequel le procédé de fabrication additive est du type à fusion de dépôt de poudres métalliques par faisceau laser.

4. Procédé selon l'une des revendications précédentes, comportant après l'étape d'apport de matière, une étape d'usinage, avec un procédé tel qu'un procédé d'usinage par électro érosion de la matière (25) déposée.

5. Procédé selon l'une des revendications précédentes, dans lequel la matière (25) est déposée de façon à s'étendre depuis un bord (19) de la paroi d'intrados (17), jusqu'à un bord (21) de la paroi d'extrados (18).

## Patentansprüche

1. Verfahren zur Herstellung einer Schaufel (16) einer Turbomaschine, die eine druckseitige Wand (17) und eine saugseitige Wand (18), zwischen denen sich ein Zwischenraum befindet, sowie eine Spitze mit einer Absenkung (24) umfasst, welche begrenzt wird durch eine Abschlusswand (23), welche die druckseitige Wand (17) mit der saugseitigen Wand (18) verbindet, durch eine Kante (19) der druckseitigen Wand (17), die über die Abschlusswand (23) hinausragt, und durch eine Kante (21) der saugseitigen Wand (18), die über die Abschlusswand (23) hinausragt, wobei die Abschlusswand (23) den Boden (23) der Absenkung (24) bildet, wobei das Verfahren einen Schmelzschritt umfasst, in dessen Verlauf mindestens die Absenkung (24), die druckseitige Wand (17) und die saugseitige Wand (18) der Schaufel erzeugt werden, **dadurch gekennzeichnet, dass** es einen Schritt umfasst, in dessen Verlauf mittels eines additiven Fertigungsverfahrens metallisches Material auf dem Boden (23) der Absenkung aufgebracht wird, um in dieser Absenkung eine Innenwand (25, 28) zu erzeugen, die von deren Boden (23) getragen wird.

2. Verfahren gemäß Anspruch 1, bei dem das Aufbringen des metallischen Materials in Form des Aufbringens von Metallpulver erfolgt.

3. Verfahren gemäß Anspruch 2, bei dem das additive Fertigungsverfahren im Laserschmelzen von aufgebrachtem Metallpulver besteht.

4. Verfahren gemäß einem der vorstehenden Ansprüche, das nach dem Schritt des Aufbringens von Material einen Bearbeitungsschritt umfasst, in dessen Verlauf ein Verfahren wie die Bearbeitung des aufgebrachten Materials (25) mittels Elektroerosion durchgeführt wird.

5. Verfahren gemäß einem der vorstehenden Ansprüche, bei dem das Material (25) so aufgebracht wird, dass es sich von einer Kante (19) der druckseitigen Wand (17) bis zu einer Kante (21) der saugseitigen Wand (18) erstreckt.

## Claims

1. Method for manufacturing a turbine engine blade (16) including an active-surface wall (17) and a passive-surface wall (18) separated from one another a bathtub tip (24) delimited by a closing wall (23) grouping together the active-surface wall (17) and passive-surface wall (18), by an edge (19) of the active-surface wall (17) extending over the closing wall (23) and by an edge (21) of the passive-surface wall (18) extending over the closing wall (23), the closing wall (23) forming the bottom (23) of the bathtub tip (24), the method comprising a step of casting to form at least the bathtub tip (24) and the active surface wall (17) and the passive-surface wall (18) of the blade (16) **characterised in that** it comprises a step of adding metal to the bottom (23) of the bathtub tip with an Additive Manufacturing method to constitute in this bathtub tip, an inner partition (25, 28) supported by the bottom (23) thereof.

2. Method according to claim 1, wherein the metal material is provided by depositing metal powder.

3. Method according to claim 2, wherein the Additive Manufacturing method is a method of the kind that fuses deposited metal powders by a laser beam

4. Method according to any of the previous claims, comprising after the step of adding material, a machining step, with a method such as a method of machining by electroeroding the deposited material (25).

5. Method according to any of the previous claims, wherein the material (25) is deposited so as to extend from an edge (19) of the active-surface wall (17), to an edge (21) of the passive-surface wall (18).
